**Europäisches Patentamt**

**(19) European Patent Office**

**Office européen des brevets**

(11) Publication number : **0 341 061 B1**

## EUROPEAN PATENT SPECIFICATION

(45) Date of publication of patent specification :
**19.04.95 Bulletin 95/16**

(51) Int. Cl.$^6$ : **G06F 13/18**

(21) Application number : **89304496.6**

(22) Date of filing : **04.05.89**

(54) **Data processing system with memory-access priority control.**

(30) Priority : **06.05.88 JP 110225/88**

(43) Date of publication of application :
**08.11.89 Bulletin 89/45**

(45) Publication of the grant of the patent :
**19.04.95 Bulletin 95/16**

(84) Designated Contracting States :
**DE FR GB**

(56) References cited :
**EP-A- 0 147 295**
**TRANSACTIONS OF THE I.E.C.E. OF JAPAN,**
**vol. E69, no. 6, June 1986, pages 726-729,**
**Tokyo, JP; S. HORIGUCHI et al.: "Throughput**
**of multiprocessor systems with common**
**memories"**

(73) Proprietor : **FUJITSU LIMITED**
**1015, Kamikodanaka**
**Nakahara-ku**
**Kawasaki-shi Kanagawa 211 (JP)**

(72) Inventor : **Nishida, Hidehiko**
**139-4-714, Omaru**
**Inagi-shi Tokyo 206 (JP)**

(74) Representative : **Stebbing, Timothy Charles et**
**al**
**Haseltine Lake & Co.**
**Hazlitt House**
**28 Southampton Buildings**
**Chancery Lane**
**London WC2A 1AT (GB)**

## Description

The present invention relates to a data processing system, more particularly, to a data processing system with memory access priority control means.

As is well known, the data processing system used in a computer system can be formed by a plurality of multi-processor systems, each of which comprises a plurality of central processing units, main memory units, and a memory control unit. The central processing units are connected to the main memory units through the memory control unit by interface lines, and each memory control unit is connected to each other memory control unit by interface lines.

In existing data processing systems, when improving the data throughput, only the number of central processing unit connected to the memory control unit is increased for processing a large amount of data in the multi-processor system. However, the number of central processing units that can be connected to the memory control unit is limited, for reasons concerning mass productivity and system expansion at a customer's office. Further, in the above described data processing system, it is demanded to speed up access speed to the main memories which are commonly used by each central processing unit.

The present invention provides a data processing system enabling an improved data throughput of the system by using the registers RP0, RP1, RP2, and RP3 effectively, and by enabling an effective and high-speed access control for mutual data transmission.

EP-A-0 147 295 discloses a data processing system used in a computer system including a plurality of multi-processor systems, each multi-processor system having at least one access generating means and at least one main memory both connected to a memory control unit which is connected to a memory control unit of another multiprocessor system through interface lines for data transmission. Each of the multi-processor systems comprises a plurality of signal storing means for storing an access request signal transmitted from one of the access generating means until an access operated by the access request signal is confirmed to be finished.

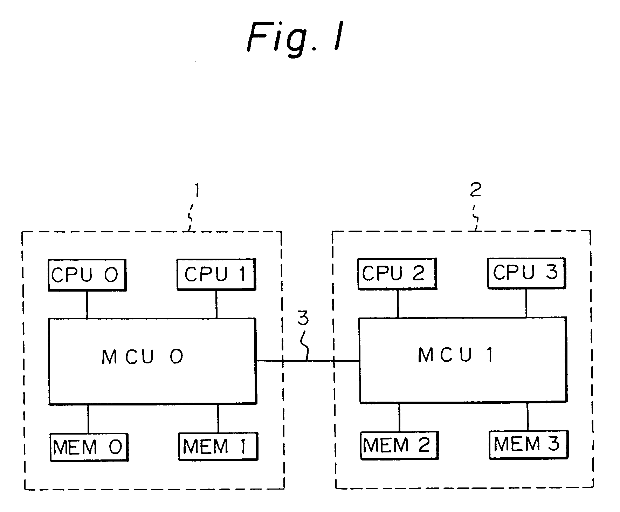

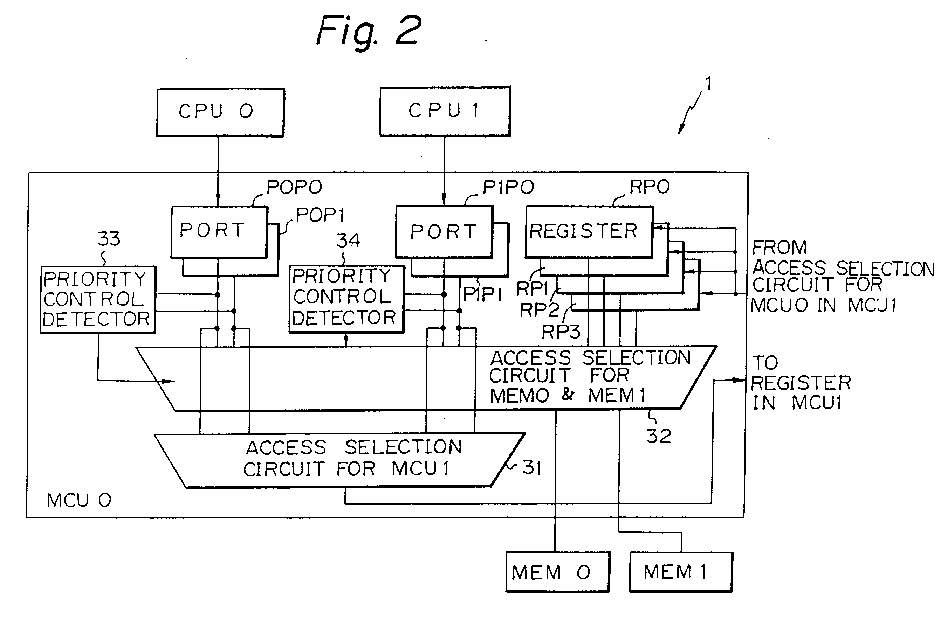

A data processing system of the same general type is explained below with reference to Figs. 1 and 2.

EP-A-0 323 080 constitutes prior art for the present application under Article 54(3) and (4) EPC. It discloses a data processing system having the same basic structure as just mentioned, and in addition each multi-processor system further comprises a plurality of registers for storing access request signals transmitted from the memory control unit of the other multi-processor system, and an access selecting circuit for transmitting the access request signal from the storing means or registers to the memory control unit of the same multi-processor system.

According to the present invention, there is provided a data processing system used in a computer system including a plurality of multi-processor systems, each multi-processor system having at least one access generating means and at least one main memory both connected to a memory control unit which is connected to a memory control unit of another multi-processor system through interface lines for data transmission, each said multi-processor system comprising:

a plurality of signal storing means for storing an access request signal transmitted from one of said access generating means until an access operated by said access request signal is confirmed to be finished; characterised in that each said multi-processor system further comprises :

an access selection means for transmitting continual preceding and following access request signals from the same access generating means to said memory control unit of another said multi-processor system;

a priority control means for detecting a necessity of priority control between said continual preceding access request signal and following access request signal, and for generating a priority control signal when priority control is detected to be necessary;

a plurality of registers for storing access request signals transmitted from the memory control unit of the other multi-processor system;

an access selecting circuit for transmitting said access request signal from said signal storing means or registers to said memory control unit of the same multi-processor system;

a first control means for transmitting said priority control signal together with said following access request signal to said registers of the other multi-processing system, when the necessity of priority control for said preceding and following access request signals from the same access generating means is detected by said priority control means; and

a second control means for inhibiting said following access request signal with said priority control signal in one of said registers from transmitting to said access selection circuit while said preceding access request signal from the same access generating means exists in one of said registers.

In embodiments of the present invention, when a multi-processor system including a plurality of central processing units and a plurality of main memories both connected to a memory control unit accesses another multi-processor system, a priority in access requests from the same central processing unit to the other multi-processor system is detected, and registers to store the access request signals in the other multi-processor system are efficiently used by adding a priority control signal to the access request signal. As a result, data throughput of the system is improved.

Reference is made, by way of example, to the accompanying drawings, wherein:

Fig.1 is a schematic block diagram of an existing data processing system constituted by two multi-processor systems;

Fig.2 is a basic block diagram of a memory control unit in Fig.1;

Fig.3 is a basic block diagram of a memory control unit according to one embodiment of the present invention constituted by two multi-processor systems;

Fig.4 is a circuit diagram of a priority control circuit in Fig.3 according to one embodiment of the present invention; and

Fig.5 is a partial circuit diagram of the memory control unit in Fig.3.

Before describing the preferred embodiments, an explanation will be given of an existing data processing system shown in Figs.1 and 2.

Fig.1 shows an existing multi-processor system of a data processing system used in a computer system. Although a data processing system is generally constituted by a plurality of multi-processor systems, the data processing system of this example is constituted by two multi-processor systems, i.e., a first multi-processor system 1 and a second multi-processor system 2, to facilitate explanation.

The first multi-processor system 1 comprises two central processing units CPU0 and CPU1, two main memory units MEM0 and MEM1, and a memory control unit MCU0. The second multi-processor system 2 comprises two central processing units CPU2 and CPU3, two main memory units MEM2 and MEM3, and a memory control unit MCU1. And the memory control unit MCU0 of the first multi-processor 1 and the memory control unit MCU1 of the second multi-processor 2 are connected by the interface line 3 to exchange access request signals from CPU0, CPU1, CPU2, and CPU3, and data from main memories MEM0, MEM1, MEM2, and MEM3.

The basic processing operation of each multi-processor system is divided into an inner access and an outer access. In inner access, the central processing unit accesses the main memory in the same system through the memory control unit, and in outer access, the central processing unit accesses the main memory in the other system through the memory control units in the same system and in the other system. These operations of the first system 1 shown in Fig. 1 will be explained individually hereinafter.

(1) Inner access : When the central processing unit CPU0 requests access to the main memory unit MEM0 in the first system 1 for reading out the data stored in the main memory unit MEM0 (called a "fetch access"), first, an access request signal generated by the central processing unit CPU0 is transmitted to the memory control unit MCU0, second, the memory control unit MCU0 accesses the main memory MEM0, third, the main memory MEM0 reads out and transmits the data to the memory control unit MCU0, and fourth, the memory control unit MCU0 transmits the data to the central processing unit CPU0. When the central processing unit CPU0 requests access to the main memory unit MEM0 in the first system 1 for writing in the data in the central processing unit CPU0 (called a "store access"), first, an access request signal generated by the central processing unit CPU0 is transmitted to the memory control unit MCU0, second, the memory control unit MCU0 accesses the main memory unit MEM0, and third, the main memory unit MEM0 writes in the data and stores it.

(2) Outer access : When the central processing unit CPU0 requests access to the main memory unit MEM2 in the second system 2 for reading out the data stored in the main memory MEM2 (also a "fetch access"), first, an access request signal generated by the central processing CPU0 is transmitted to the memory control unit MCU0, second, the memory control unit MCU0 transmits the access request signal to the memory control unit MCU1, third, the memory control unit MCU1 accesses the main memory MEM2, fourth, the main memory MEM2 reads out and transmits the data to the memory control unit MCU1, fifth, the memory control unit MCU1 transmits the data to the memory control unit MCU0, and sixth, the memory control unit MCU0 transmits the data to the central processing unit CPU0. When the central processing unit CPU0 requests access to the main memory MEM2 in the second system 2 for writing in the data stored in the central processing unit CPU0 (also a "store access"), first, an access request signal generated by the central processing unit CPU0 is transmitted to the memory control unit MCU0, second, the memory control unit MCU0 transmits the access request signal to the memory control unit MCU1, third, the memory control unit MCU1 accesses the main memory MEM2, and fourth, the main memory MEM2 writes in the data and stores it.

Figure 2 shows the inner construction of the memory control unit MCU0. In Fig. 2, P0P0, P0P1, P1P0, and P1P1 represent ports, RP0, RP1, RP2, and RP3 represent registers, 31 represent an access selection circuit for memory control unit MCU1, 32 represents an access selection circuit for main memories MEM0 and MEM1, and 33, 34 represent priority control detectors. The ports P0P0 and P0P1 are connected to the central processing unit CPU0 and the ports P1P0 and P1P1 are connected to the central processing unit CPU1. The registers RP0, RP1, RP2, and RP3 are connected to an access selection circuit for MCU0 of the memory control unit MCU1 in the second multi-processor system 2. The output of the ports P0P0 and P0P1 and the output of the ports P1P0 and P1P1 are input to the access selection circuit 31 or the access selection circuit 32. The outputs of the registers RP0, RP1, RP2, and RP3 are input to the access selection circuit 32. The output of the access selection circuit 31 is connected to the registers RP0, RP1, RP2, and RP3 of the memory control unit MCU1 in the second multi-processor system 2, and the output of the access selection circuit 32 is connected to the main memories MEM0 and MEM1. The priority control detectors 33 and 34 detect the stored request signals in the ports P0P0 and P0P1, and P1P0 and P1P1 to generate a priority control signal which is called a wait signal W.

When the access request signal generated by the central processing unit CPU0 is transmitted to the memory control unit MCU0, this request signal is set in one of the ports, for example, set in the port P0P0 first as a preceding access request signal. If this request signal is for inner access, the access request signal in the port P0P0 is input to the access selection circuit 32 for main memories MEM0 and MEM1. And if the request signal in the port P0P0 is for outer access, the access request signal is input to the access selection circuit 31 for memory control unit MCU1, and further the access request signal in the port P0P0 is held until the end of this outer access is confirmed by the confirmation signal returned from the memory control unit MCU1. If the following access request signal is input to the memory control unit MCU0 from the same central processing unit CPU0, while the preceding access request signal is held in the port P0P0, the following access request signal is set in the port P0P1.

If, the preceding and the following access request signals set in the ports P0P0 and P0P1 are both for inner access, the priority control detector 33 operates differently according to the nature of the access request signals in the ports P0P0 and P0P1 as shown in the table below.

| PRECEDING | FOLLOWING | OPERATION |
|---|---|---|
| store access | fetch access | add wait signal W to following |
| fetch access | store access | add wait signal W to following |
| fetch access | fetch access | wait signal W is not generated |
| store access | store access | add wait signal W to following |

If the preceding and the following access request signals set in the ports P1P0 and P1P1 are both for inner access, the priority control detector 34 operates in the same manner as the priority control detector 33.

Meanwhile, if the preceding and the following access request signals set in the ports P0P0 and P0P1 are both for outer access, the preceding and the following access request signals are transmitted to two of the registers RP0, RP1, RP2, and RP3 in the other multi-processor system with a restriction that the following request signal cannot be set in the register of a lower number than the number of register where the preceding request signal has been set. For example, if the preceding request signal from a central processing unit has been set in the register RP2, the following request signal from the same central processing unit has to be set in the resister RP3 and it cannot be set in the register RP0 or RP1 which have a lower number than the register RP2 at this time. This restriction is not executed when the preceding access request signal and the following access request signal are transmitted from different central processing units, because priority control is necessary only for the sequential access from the same central processing unit.

However, in the above mentioned type of data processing system, the registers RP0, RP1, RP2, and RP3 are not used effectively for the following reasons:(1) if the preceding request signal from a central processing unit has been set in the register RP3, the following request signal from the same central processing unit cannot be set in the register RP0, RP1, or RP2 until the access request signal in the register RP3 is erased even if there is an unused register in the registers RP0, RP1, or RP2 according to the above described restrictions; (2) priority control is executed for every preceding access request signal and the following access request signal from the same central processing unit even though the preceding access and the following access are both fetch accesses for which priority control is not necessary. For these reasons, there is a time loss for each multi-processor system to access the other multi-processor system in the existing data processing system.

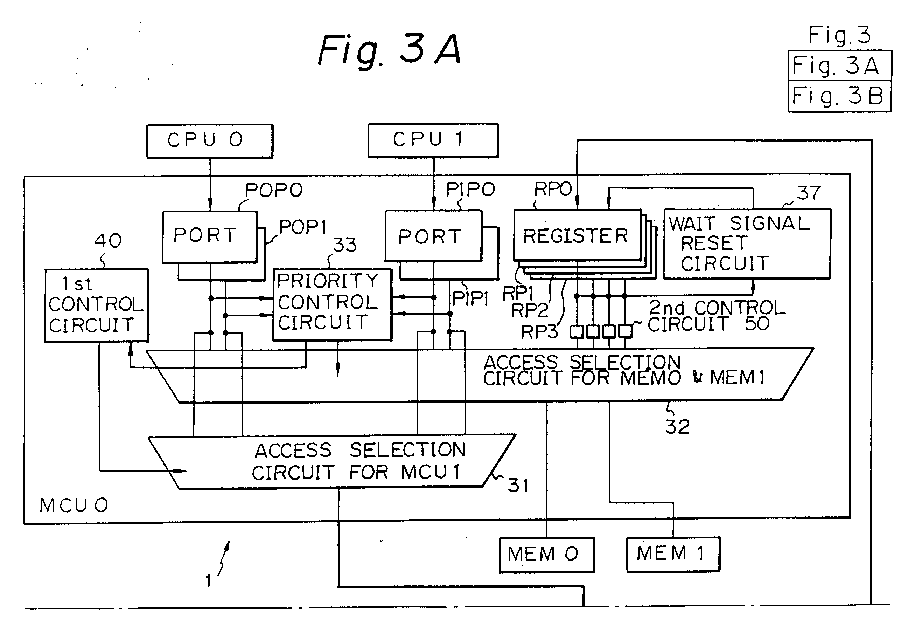

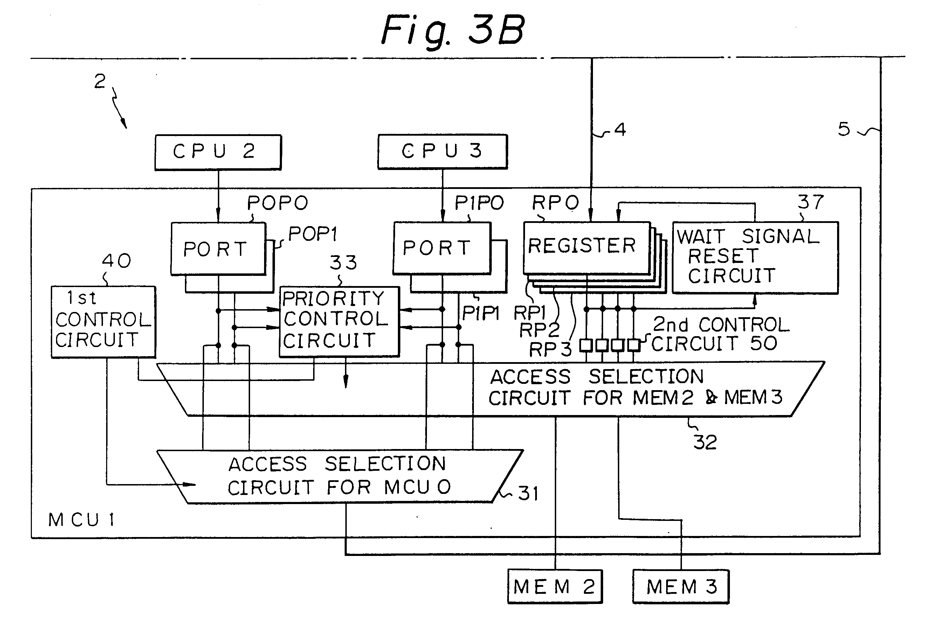

Figure 3 shows a multi-processor system of a data processing system used in a computer system embodying the present invention. Although a data processing system is generally constituted by a plurality of multi-processor systems, the data processing system of this example is constituted by two multi-processor systems, i.e., a first multi-processor system 1 and a second multi-processor system 2, to facilitate explanation of the this embodiment.

The first multi-processor system 1 comprises two central processing units CPU0 and CPU1, two main memory units MEM0 and MEM1, and a memory control unit MCU0. The second multi-processor system 2 comprises two central processing units CPU2 and CPU3, two main memory units MEM2 and MEM3, and a memory control unit MCU1. And the memory control unit MCU0 of the first multi-processor 1 and the memory control unit MCU1 of the second multi-processor 2 are connected by the interface lines 4 and 5 to exchange access request signals from CPU0, CPU1, CPU2, and CPU3, and data from main memories MEM0, MEM1, MEM2, and MEM3.

The basic processing operation of each multi-processor system is divided into an inner access and an outer access. In inner access, the central processing unit accesses the main memory in the same system through the memory control unit, and in outer access, the central processing unit accesses the main memory in other systems through the memory control units in the same system and in the other system. In these operations of the data processing system according to the present invention, the inner access is just the same as in the existing data processing system shown in Figs. 1 and 2, so that only the outer operations of the multi-processor system shown in Fig.3 will be explained after the explanation of an inner construction of memory control units MCU0 and MCU1.

In Fig. 3, P0P0, P0P1, P1P0, and P1P1 represent ports, RP0, RP1, RP2, and RP3 represent registers, 31 represents an access selection circuit for memory control unit MCU1 or MCU0, 32 represents an access selection circuit for main memories MEM0 and MEM1, or MEM2 and MEM3, 33 represents a priority control circuit, 37 represents a wait signal reset circuit, 40 represents a first control circuit, and 50 represents a second control circuit. The ports P0P0 and P0P1 are connected to one of the central processing unit CPU's, and the ports P1P0 and P1P1 are connected to the other central processing unit CPU in the system. The registers RP0, RP1, RP2, and RP3 are connected to an access selection circuit 31 in the other multi-processor system. The output of the ports P0P0 and P0P1 and the output of the ports P1P0 and P1P1 are input to the access selection circuit 31 or the access selection circuit 32. The output of the registers RP0, RP1, RP2, and RP3 are input to the access selection circuit 32 for main memory in the same system through the second control circuit 50. The output of the access selection circuit 31 is input to the registers RP0, RP1, RP2, and RP3 of the other system, and the output of the access selection circuit 32 is input to the main memories of the same system. The priority control circuit is connected to the ports P0P0, P0P1, P1P0, and P1P1 to detect the priority of access request signals from the same central processing unit. The first control circuit 40 is connected between the priority control circuit and the access selection circuit 31 to transmit a wait signal together with the following access request signal when priority control is detected to be necessary by the priority control circuit 33.

When a central processing unit CPU requests access to one of the main memory units MEM in other system for reading out the data stored in one of the main memory MEM (called a "fetch access") as a preceding access request, first, the preceding access request signal is set in a port of a memory control unit MCU of this system, second, the preceding access request signal is transmitted to the other memory control unit MCU through an access selection circuit 31, and third, it is set in an unused register RP of the other system. The preceding access request signal is held in the port after it is transmitted to the other system. When the same central processing unit CPU requests access to one of the main memories MEM in the other system for writing in the data stored in the central processing unit CPU (called a "store access") as a following access request, first, the following access request signal is set in another port of the memory control unit MCU of this system, second, the preceding and the following access request signals are compared by a priority control circuit 33, third, the priority control circuit 33 generates a wait signal, W, fourth, the following access request signal is transmitted to the other memory control unit MCU through an access selection circuit 31 with the wait signal by the operation of the first control circuit 40, and fifth, they are set in an unused register RP of the other system unrelated to the position where the preceding access request signal has already been set.

The same operation is executed when the preceding access request is the "store access" and the following access request is the "fetch access", and when the preceding access request and the following access request are both the "store access". However, when the preceding access request and the following access request are both the "fetch access", the priority control circuit 33 doesn't generate the wait signal W, then the following access request signal is transmitted to the other memory control unit MCU through an access selection circuit without the wait signal by the operation of the first control circuit 40. At this time, the following access request signal is also set in an unused register RP of the other system unrelated to the position of the preceding access request signal in the register.

In the other multi-processor system, the preceding access request signal (an access request signal without the wait signal) in the register is transmitted to the access selection circuit 32 prior to the following access request signal (an access request signal with the wait signal) by the operation of the second control circuit 50.

When the preceding access request signal is transmitted from the register and the end of an access by that access request signal is confirmed, the wait signal of the following access request signal is erased by the operation of the wait signal reset circuit 37.

Thus, in accordance with the structure and method of the present invention, it is possible to improve data throughput of the system by using the registers of the other system effectively, and by enabling an effective and high speed access control for mutual data transmission.

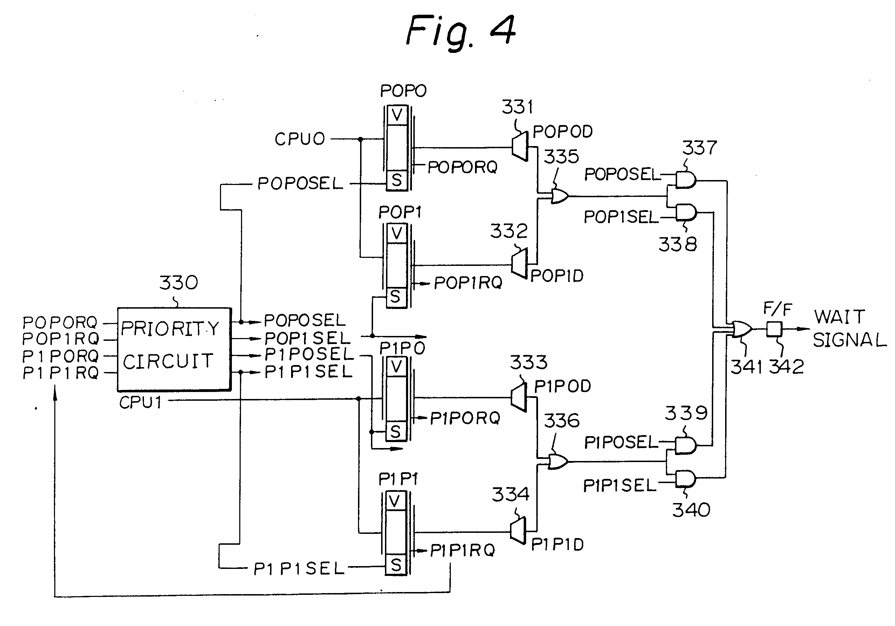

Figure 4 is a detailed circuit diagram of one embodiment of a priority control circuit 33 shown in Fig. 3. In Fig. 3, 330 represents a priority circuit, 331 to 334 represent decoders, 335, 336, and 341 represent OR gates, 337 to 340 represent AND gates, and 342 represents a flip-flop. The access request signal including an operation code from the central processing unit CPU0 is set in the ports P0P0 or P0P1, and the access request signal from the central processing unit CPU1 is set in the ports P1P0 or P1P1. Each access request signal (shown by P0P0RQ, P0P1RQ, P1P0RQ, and P1P1RQ in Fig. 4) in the ports is branched and transmitted to the priority circuit 330, and a select signal (shown by P0P0SEL, P0P1SEL, P1P0SEL, or P1P1SEL in Fig. 4) is generated according to the priority of the access request signals. When a preceding access request signal is transmitted in the port P0P0 (the port P0P1 is empty ), the select signal P0P0SEL is generated in the priority circuit 330. After the port P0P0 is selected by this select signal P0P0SEL, a bit S is set to "1" by the select signal P0P0SEL. Accordingly, the bit S indicates a selection possibility and the port with "1" level in the bit S cannot be selected. Note That, if the access request signal is for inner access, the bit S of the port is set to "1" by force when the access request signal is set to the port, thereby transmission of the signal from this port to the other system does not occur. The operation code in each access request signal is transmitted to the decoder 331 to 334, for detection of whether or not priority control is necessary. If the access request signal is for "store access", it is detected that priority control is necessary, but if the access request signal is for "fetch access", it is detected that priority control is not necessary according to the operation code.

If an access request signal which needs priority control exists in one of the ports connected to the same central processing unit, this access request signal is selected by the select signal and a wait signal W is generated at this time as follows. When a preceding access request signal P0P0RQ in the port P0P0 is for "store access", and a following access request signal P0P1RQ in the port P0P1 is for "fetch access", the decoder 331 outputs the priority signal POPOD (high level "1") by detecting the operation code which indicates "store access" from the port P0P0, but the decoder 332 doesn't output the priority signal POPOD because the operation code from the port P0P0 indicates "fetch access". The priority signal POPOD is transmitted to the AND gate 337 and 338 through the OR gate 335. On the other hand, the access request signals P0P0RQ and P0P1RQ are both transmitted to the priority circuit 330, then the access request signal P0P1RQ is selected and the select signal P0P1SEL (high level "1") is generated. The select signal P0P1SEL is transmitted to the port P0P1 and the AND gate 338. In this way, an output signal is generated at the AND gate 338, and this output signal becomes a wait signal W of high level "1" through the OR gate 341 and the flip-flop 342.

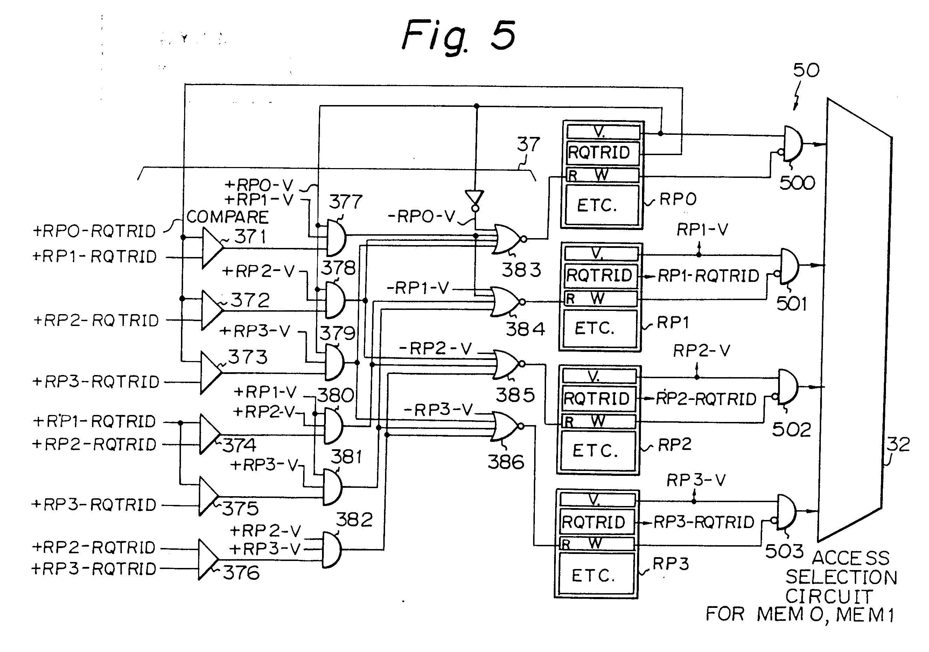

In Fig, 5 there is illustrated a detailed circuit diagram of one embodiment of the wait signal reset circuit 37 and second control circuit 50 shown in Fig. 3, together with the registers RP0 to RP3 and the access selection circuit 32 in each memory control unit. The wait signal reset circuit 37 includes six comparators 371 to 376 for detecting whether or not sources of two access request signals are the same central processing unit by comparing two requester ID signals RQTRID, six AND gates 377 to 382, four NOR gates, and four inverters (only one inverter 387 is shown in Fig. 5), and the second control circuit 50 is composed of four AND gates 500 to 503. In each register RP, V represents a valid signal storing area, RQTRID represents a storing area for requester ID signal which identifies a signal source, W represents a wait signal storing area, and ETC. represents another storing area. The requester ID signal is set in the RQTRID of the register RP when the contents of a port is transmitted to the register, because each port has a ID signal generating means (not shown in Fig. 4) and the requester ID signal is transmitted to the register RP in the other system together with the other informations. In Fig. 5, +RPi-RQTRID (i is 0, 1, 2, or 3) represents the requester ID signal from the register RPi, which indicates the source of the access request signal, for example, the source is the central processing unit CPU0, +RPi-V represents the valid signal from the register RPi, and -RPi-V represents the inverted valid signal from the register RPi. Six comparators 371 to 376 are provided to compare every combination of the requester ID signal from four registers RP0 to RP3, and every comparator outputs a high level signal "1" when two input requester ID's indicate the same source. Six AND gates 377 to 382 are provided to obtain a logical product of every combination of the requester ID signal and the valid signal from four registers RP0 to RP3. Each output signal of the AND gates 377 to 382 is transmitted to a reset terminal of the wait signal storing area corresponding to the input signal through the corresponding NOR gate.

The operation of the second control circuit 50 is explained below under the condition that the preceding access request signal is set in the register RP0, and the following access request signal is set in the register RP1 with the wait signal W. The AND gate 500 transmits a high level signal "1" to the access selection circuit 32 since the valid signal is high and the wait signal is low at register RP0, while the AND gate 501 transmits a lower level signal "0" to the access selection circuit 32 since the valid signal is high level and the wait signal is high level at register RP1. In this way, the access selection circuit 32 can access one of the main memories according to the access request signal from the register RP0 prior to the access request signal from the register RP1.

The reset operation of the wait signal reset circuit 37 is next explained below under the condition that the preceding access request signal from the central processing unit CPU1 is set in the register RP0, the following access request signal from the central processing unit CPU1 is set in the register RP1 with the wait signal W, and the access request signal from the central processing unit CPU0 is not set in other registers.

(1) Before the access by the preceding access request signal stored in the register RP0 is not operated, the logic level of each valid signal is as follows.

RP0-V :"1"     RP1-V :"1"     RP2-V :"0"     RP3-V :"0"
-RP0-V :"0"     -RP1-V :"0"     -RP2-V :"1"     -RP3-V :"1".

And RP0-RQTRID and RP1-RQTRID indicate that the source of the access request signal is the central processing unit CPU1. In this condition, only the comparator 371 outputs the high level signal "1", and only the AND gate 377 outputs the high level signal "1". Accordingly, every NOR gate outputs a low level signal "0", so that none of the wait signals is reset.

(2) When the access by the preceding access request signal stored in the register RP0 is finished, the valid signal in the port P0P0 is reset, and then the signal RP0-V is changed from high "1" to low "0" and the signal -RP0-V is changed from low "0" to high "1". Then the output of the AND gate 378 changes from low "0" to high "1". This change causes the output level of the NOR gate 384 change from low "0" to high "1", thereby resetting the wait signal W in the register RP1. In this way, the wait signal of the following access request signals is reset by the wait signal reset circuit 37.

## Claims

1. A data processing system used in a computer system including a plurality of multi-processor systems, each multi-processor system having at least one access generating means (CPU) and at least one main memory (MEM) both connected to a memory control unit (MCU) which is connected to a memory control unit (MCU) of another multi-processor system through interface lines for data transmission, each said multi-processor system comprising:

   a plurality of signal storing means (PORT) for storing an access request signal transmitted from one of said access generating means (CPU) until an access operated by said access request signal is confirmed to be finished; characterised in that each said multi-processor system further comprises :

   an access selection means (31) for transmitting continual preceding and following access request signals from the same access generating means (CPU) to said memory control unit (MCU) of another said multi-processor system;

   a priority control means (33) for detecting a necessity of priority control between said continual preceding access request signal and following access request signal, and for generating a priority control signal (W) when priority control is detected to be necessary;

   a plurality of registers (RP) for storing access request signals transmitted from the memory control unit (MCU) of the other multi-processor system;

   an access selecting circuit (32) for transmitting said access request signal from said signal storing means (port) or registers (RP) to said memory control unit (MCU) of the same multi-processor system;

   a first control means (40) for transmitting said priority control signal (W) together with said following access request signal to said registers (RP) of the other multi-processing system, when the necessity of priority control for said preceding and following access request signals from the same access generating means (CPU) is detected by said priority control means (33); and

   a second control means (50) for inhibiting said following access request signal with said priority control signal (W) in one of said registers (RP) from being transmitted to said access selection circuit (32) while said preceding access request signal from same access generating means (CPU) exists in one of said registers (RP).

2. A data processing system as set forth in claim 1, wherein said second control means (50) includes an erase circuit (37) for erasing said priority control signal (W) accompanying to said following access request signal, when a preceding access operated by said preceding access request signal is finished.

3. A data processing system as set forth in claim 1 or 2, wherein said second control means (50) stores said access request signal transmitted from another multi-processing system in an empty register at random.

4. A data processing system as set forth in claim 1, 2 or 3, wherein said priority control means (33) generates said priority control signal (W) when said preceding and following access request signals are transmitted from the same access generating means (CPU), and the preceding access request signal is for store access and the following access request signal is for fetch access, or the preceding access request signal is for fetch access and the following access request signal is for store access, or the preceding access request signal and following access request signals are for both store access.

## Patentansprüche

1. Datenverarbeitungssystem, das in einem Computersystem verwendet wird, das eine Vielzahl von Multiprozessorsystemen beinhaltet, wobei jedes Multiprozessorsystem wenigstens ein Zugriffserzeugungsmittel (CPU) und wenigstens einen Hauptspeicher (MEM) besitzt, die beide mit einer Speichersteuereinheit (MCU) verbunden sind, welche mit einer Speichersteuereinheit eines anderen Multiprozessorsystems über Schnittstellenleitungen zur Datenübertragung verbunden ist, und jedes Multiprozessorsystem eine Vielzahl von Signalspeichermitteln (PORT) aufweist, um ein Zugriffsanforderungssignal, das von einem der Zugriffserzeugungsmittel (CPU) übertragen worden ist, zu speichern, bis ein Zugriff, der durch das Zugriffsanforderungssignal bewirkt wird, als abgeschlossen bestätigt wird, dadurch gekennzeichnet, daß jedes der Multiprozessorsysteme weiterhin aufweist:
   ein Zugriffsauswahlmittel (31), um kontinuierliche vorhergehende und folgende Zugriffsanforderungssignale von demselben Zugriffserzeugungsmittel (CPU) zu der Speichersteuereinheit (MCU) eines anderen Multiprozessorsystems zu übertragen;
   ein Vorrangsteuermittel (33), um die Notwendigkeit einer Vorrangsteuerung zwischen dem kontinuierlichen vorhergehenden Zugriffsanforderungssignal und dem folgenden Zugriffsanforderungssignal festzustellen und um ein Vorrangsteuersignal (W) zu erzeugen, wenn eine Vorrangsteuerung als erforderlich festgestellt worden ist;
   eine Vielzahl von Registern (RP), um Zugriffsanforderungssignale zu speichern, die von der Speichersteuereinheit (MCU) des anderen Multiprozessorsystems übertragen worden sind;
   einen Zugriffsauswahlschaltkreis (32), um das Zugriffsanforderungssignal von den Signalspeichermitteln (PORT) oder Registern (RP) zu der Speichersteuereinheit (MCU) desselben Multiprozessorsystems zu übertragen;
   ein erstes Steuermittel (40), um das Vorrangsteuersignal (W) zusammen mit dem folgenden Zugriffsanforderungssignal zu den Registern (RP) des anderen Multiprozessorsystems zu übertragen, wenn die Notwendigkeit einer Vorrangsteuerung für die vorhergehenden und folgenden Zugriffsanforderungssignale von demselben Zugriffserzeugungsmittel (CPU) durch das Vorrangsteuermittel (33) festgestellt worden ist; und
   ein zweites Steuermittel (50), um zu verhindern, daß das folgende Zugriffsanforderungssignal mit dem Vorrangsteuersignal (W) in einem der Register (RP) zu dem Zugriffsauswahlschaltkreis (32) übertragen wird, während das vorhergehende Zugriffsanforderungssignal von demselben Zugriffserzeugungsmittel (CPU) in einem der Register (RP) vorhanden ist.

2. Datenverarbeitungssystem nach Anspruch 1, bei welchem das zweite Steuermittel (50) einen Löschschaltkreis (37) beinhaltet, um das Vorrangsteuersignal (W) das mit dem folgenden Zugriffsanforderungssignal verbunden ist, zu löschen, wenn der vorhergehende Zugriff, der durch das vorhergehende Zugriffsanforderungssignal bewirkt worden ist, beendet ist.

3. Datenverarbeitungssystem nach Anspruch 1 oder 2, bei welchem das zweite Steuermittel (50) das Zugriffsanforderungssignal speichert, das von einem anderen Multiprozessorsystem in ein leeres Register wahlfrei übertragen worden ist.

4. Datenverarbeitungssystem nach Anspruch 1, 2 oder 3, bei welchem das Vorrangsteuermittel (33) ein Vorrangsteuersignal (W) erzeugt, wenn die vorhergehenden und die folgenden Zugriffsanforderungssignale von demselben Zugriffserzeugungsmittel (CPU) übertragen worden sind und das vorhergehende Zugriffsanforderungssignal für einen Speicherzugriff steht und das folgende Zugriffsanforderungssignal für einen Abrufzugriff steht, oder wenn das vorhergehende Zugriffsanforderungssignal für einen Abrufzugriff steht und das folgende Zugriffsanforderungssignal für einen Speicherzugriff steht, oder wenn das vorhergehende Zugriffsanforderungssignal und das folgende Zugriffsanforderungssignal beide für einen Speicherzugriff stehen.

**Revendications**

1.   Système de traitement de données utilisé dans un système d'ordinateur comprenant une pluralité de systèmes multiprocesseurs, chaque système multiprocesseur ayant au moins un dispositif de génération d'accès (CPU) et au moins une mémoire principale (MEM) les deux reliés à une unité de commande de mémoire (MCU) qui est reliée à une unité de commande de mémoire (MCU) d'un autre système multiprocesseur via des lignes d'interface pour une transmission de données, chaque dit système multiprocesseur comprenant :

   une pluralité de dispositifs de stockage de signaux (PORT) pour stocker un signal de demande d'accès transmis à partir d'un desdits dispositifs de génération d'accès (CPU) jusqu'à ce que la fin d'un accès actionné par ledit signal de demande d'accès soit confirmée ;

   caractérisé en ce que chaque dit système multiprocesseur comprend en outre :

   un dispositif de sélection d'accès (31) pour transmettre en continu des signaux de demande d'accès précédent et suivant à partir du même dispositif de génération d'accès (CPU) vers ladite unité de commande de mémoire (MCU) d'un autre dit système multiprocesseur ;

   un dispositif de commande de priorité (33) pour détecter une nécessité d'une commande de priorité entre ledit signal de demande d'accès précédent continu et le signal de demande d'accès suivant, et pour générer un signal de commande de priorité (W) lorsqu'on détecte qu'une commande de priorité est nécessaire ;

   une pluralité de registres (RP) pour stocker des signaux de demande d'accès transmis à partir de l'unité de commande de mémoire (MCU) de l'autre système multiprocesseur ;

   un circuit de sélection d'accès (32) pour transmettre ledit signal de demande d'accès dudit dispositif de stockage de signal (PORT) ou des registres (RP) à ladite unité de commande de mémoire (MCU) du même système multiprocesseur ;

   un premier dispositif de commande (40) pour transmettre ledit signal de commande de priorité (W) ainsi que ledit signal de demande d'accès suivant auxdits registres (RP) de l'autre système multiprocesseur, lorsque la nécessité d'une commande de priorité pour lesdits signaux de demande d'accès précédent et suivant à partir du même dispositif de génération d'accès (CPU) est détectée par ledit dispositif de commande de priorité (33) ; et

   un second dispositif de commande (50) pour empêcher ledit signal de demande d'accès suivant avec ledit signal de commande de priorité (W) dans un desdits registres (RP) d'être transmis audit circuit de sélection d'accès (32) alors que ledit signal de demande d'accès précédent du même dispositif de génération d'accès (CPU) existe dans un desdits registres (RP).

2.   Système de traitement de données selon la revendication 1, dans lequel ledit second dispositif de commande (50) comprend un circuit d'effacement (37) pour effacer ledit signal de commande de priorité (W) accompagnant ledit signal de demande d'accès suivant, lorsqu'un accès précédent actionné par ledit signal de demande d'accès précédent est terminé.

3.   Système de traitement de données selon la revendication 1 ou 2, dans lequel ledit second dispositif de commande (50) stocke ledit signal de demande d'accès transmis à partir de l'autre système multiprocesseur dans un registre vide au hasard.

4.   Système de traitement de données selon la revendication 1, 2 ou 3 dans lequel ledit dispositif de commande de priorité (33) génère ledit signal de commande de priorité (W) lorsque lesdits signaux de demande d'accès précédent et suivant sont transmis à partir du même dispositif de génération d'accès (CPU), et le signal de demande d'accès précédent est pour un accès de stockage et le signal de demande d'accès suivant est pour un accès de lecture, ou le signal de demande d'accès précédent est pour un accès de lecture et le signal de demande d'accès suivant est pour un accès de stockage, ou le signal de demande d'accès précédent et les signaux de demande d'accès suivants sont tous les deux pour un accès de stockage.

# Fig. 1

# Fig. 2

*Fig. 3 A*

Fig. 3

| Fig. 3A |
|---|
| Fig. 3B |

CPU 0

CPU 1

POP0

P1P0

RP0

37

PORT

POP1

33

PORT

REGISTER

WAIT SIGNAL
RESET
CIRCUIT

40

1st
CONTROL
CIRCUIT

PRIORITY
CONTROL
CIRCUIT

P1P1

RP1

RP2

2nd CONTROL
CIRCUIT 50

RP3

ACCESS SELECTION
CIRCUIT FOR MEM0 & MEM1

32

ACCESS SELECTION
CIRCUIT FOR MCU1

31

MCU 0

1

MEM 0

MEM 1

EP 0 341 061 B1

Fig. 3B

EP 0 341 061 B1

Fig. 4

Fig. 5

ACCESS
SELECTION
CIRCUIT
FOR MEM 0, MEM 1

EP 0 341 061 B1